# EUROPEAN PATENT SPECIFICATION

(11) **EP 0 848 026 B1**
(45) Date of publication and mention of the grant of the patent: **19.06.2002**
(21) Application number: 97121754.2
(22) Date of filing: 10.12.1997
(51) Int. Cl.: C08G 63/83, C08G 63/06

(54) **Process for producing polyhydroxycarboxylic acid**
Verfahren zur Herstellung von Polyhydroxycarbonsäure
Procédé de préparation d'acides polyhydroxycarboxyliques

(30) Priority: 11.12.1996 JP 33054496
(43) Date of publication of application: 17.06.1998
(73) Proprietor: Kyowa Yuka Co., Ltd., Tokyo 100-8185 (JP)
(72) Inventor: Maruyama, Hiroshige, Inba-gun, Chiba 285 (JP); Murayama, Toshikazu, Yokkaichi-shi, Mie 510 (JP); Yanagisawa, Nirio, Yokkaichi-shi, Mie 510 (JP); Tsuzaki, Nobuko, Yokkaichi-shi, Mie 510 (JP)
(74) Representative: VOSSIUS & PARTNER

(56) References cited:
- WO-A-93/18080
- DE-A- 4 418 643

## Description

The present invention relates to a process for producing polyhydroxycarboxylic acids, specifically, those having a weight-average molecular weight of 30,000 or above. Said polyhydroxycarboxylic acids are useful as biodegradable plastics for food-wrapping films, surgical sutures, drug delivery systems, etc.

The following two methods are known as methods for producing polyhydroxycarboxylic acids by subjecting hydroxycarboxylic acids such as lactic acid and glycolic acid to polycondensation: ring-opening polymerization of cyclic dimers of hydroxycarboxylic acids such as lactide and glycolide, and direct dehydration polycondensation of hydroxycarboxylic acids.

Japanese Published Examined Patent Application No. 14688/81 and Japanese Published Unexamined Patent Application No. 69553/90, etc. disclose processes which involve ring-opening polymerization of cyclic dimers of hydroxycarboxylic acids. However, these processes are not always satisfactory for industrial utilization; that is, they are complicated due to a great number of process steps, the yield of polymers produced is low, and as a result the costs rises.

On the other hand, processes by direct dehydration polycondensation of hydroxycarboxylic acids are industrially advantageous with fewer steps, high yield, and low cost. Examples of known processes for producing polyhydroxycarboxylic acids by direct dehydration condensation of hydroxycarboxylic acids are given below.

Japanese Published Unexamined Patent Application No. 28521/86 discloses a process for producing polymers or copolymers of lactic acid and glycolic acid having a weight-average molecular weight of 5,000 or above, usually 5,000-30,000, by subjecting lactic acid and/or glycolic acid to polycondensation reaction in the presence or absence of an inorganic solid acid catalyst such as acid clay, bentonite, kaolin, talc, aluminum silicate, magnesium silicate, aluminum borate, or silicic acid.

Japanese Published Examined Patent Application No. 52930/90 discloses a process for producing polylactide having a molecular weight of at least 4,000, usually 4,000-20,000, by subjecting lactic acid to polycondensation in the absence of a polycondensation catalyst at 220-260°C at a pressure of 10 mmHg or below.

Japanese Published Examined Patent Application No. 13963/93 discloses a process for producing polyglycolide or polylactide having a molecular weight of 8,000-11,000 by adding a phosphoric acid compound or a phosphorous acid compound when the molecular weight of polylactic acid or polyglycolic acid reaches 2,000-6,000 during the polycondensation in the presence of a tin compound.

However, the molecular weight of the polyhydroxycarboxylic acids or copolymers thereof produced by the above processes is 30, 000 or below. Polyhydroxycarboxylic acids and copolymers thereof of molecular weight at such level are useful as vehicles in pharmaceutical compositions, but are dissatisfactory in physical properties as biodegradable plastics.

As for the processes for producing polyhydroxycarboxylic acids having a molecular weight of 30,000 or above, Japanese Published Unexamined Patent Application No. 65360/94 discloses a process for producing polyhydroxycarboxylic acids having a weight-average molecular weight of 15,000 or above, by subjecting hydroxycarboxylic acids or oligomers thereof to dehydration polycondensation in a reaction mixture containing an organic solvent substantially in the absence of water. However, this process requires the complicated step of dehydrating the organic solvent which is distilled together with water formed and returning it to the reaction system.

WO 95/28432 discloses a process for producing polyhydroxycarboxylic acids having a weight-average molecular weight of 50,000 or above by subjecting hydroxycarboxylic acids or oligomers thereof to polycondensation in the presence of aluminum silicate containing aluminum oxide in an amount of 5-40%. As the polyhydroxycarboxylic acids produced by this process contain a few percent of aluminum silicate, removal of the polycondensation catalyst therefrom is necessary for medical use.

DE-A-44 18 643 discloses a process for the production of polyhydroxycarboxylic acids; the process is carried out in the presence or absence of a catalyst which is preferably tin powder. However, the process results in insufficient molecular weight and yield.

Therefore, a need exists for a simple process for producing polyhydroxycarboxylic acids of high purity having excellent properties as biodegradable plastics.

An object of the present invention is to provide a process for producing polyhydroxycarboxylic acids having a weight-average molecular weight of 30,000 or above which are useful as biodegradable plastics for food-wrapping films, surgical sutures, drug delivery systems, etc.

The present invention provides a process for producing polyhydroxycarboxylic acids which comprises subjecting at least one hydroxycarboxylic acid or oligomer thereof to polycondensation in the presence of a polycondensation catalyst selected from the group consisting of an alkali metal compound (a compound of a metal of Group Ia of the periodic table), an alkaline earth metal compound (a compound of a metal of Group IIa of the periodic table), and a compound of a metal of Group IIIb of the periodic table, wherein the catalyst is used in such an amount that the concentration of the metal in the polycondensation reaction mixture becomes 5-600 ppm.

In the present invention, the polyhydroxycarboxylic acids means polymers and copolymers of hydroxycarboxylic acids.

The hydroxycarboxylic acids which may be used in the present invention are aliphatic hydroxycarboxylic acids having 2-6 carbon atoms such as lactic acid, glycolic acid, hydroxybutyric acid, hydroxyvaleric acid, and hydroxycaproic acid, which may be in any of the D-, L-, and DL- forms. Commercially available ones are preferred.

The hydroxycarboxylic acids may be used in combination with cyclic dimers thereof.

As the oligomers of hydroxycarboxylic acids, oligomers having a weight-average molecular weight of preferably 200-3,000 are used, which can be usually prepared by subjecting hydroxycarboxylic acids to dehydration polycondensation.

The polymers of hydroxycarboxylic acids are prepared by using a single kind of hydroxycarboxylic acid. The copolymers of hydroxycarboxylic acids are prepared from a mixture of 2 or more kinds of hydroxycarboxylic acids or a mixture of at least one kind of hydroxycarboxylic acid and at least one kind of cyclic compound derived from hydroxycarboxylic acid, i.e. a mixture of at least one kind of hydroxycarboxylic acid such as glycolic acid or lactic acid and at least one kind of cyclic compound derived from hydroxycarboxylic acid such as γ-butyrolactone or ε-caprolactone. Preferred copolymers are those containing lactic acid.

The hydroxycarboxylic acids may be used in the form of a solid, an aqueous solution, etc. Commercially available 50-90 wt% aqueous solutions are preferred.

The polycondensation catalysts to be used in the present invention are alkali metal compounds, alkaline earth metal compounds, and compounds of metals of Group IIIb of the periodic table.

Examples of the alkali metal compounds and the alkaline earth metal compounds are carbonates, bicarbonates, hydroxycarboxylates, acetates, hydroxides, and oxides of alkali metals such as lithium, sodium, and potassium (metals of Group Ia of the periodic table) and those of alkaline earth metals such as magnesium and calcium (metals of Group IIa of the periodic table). Particularly preferred are the above compounds of sodium and calcium.

Examples of the compounds of the metals of Group IIIb of the periodic table are carbonates, bicarbonates, hydroxycarboxylates, acetates, hydroxides, and oxides of yttrium and lanthanum, which have the same properties as the alkaline earth metal compounds. Preferred are the above compounds of lanthanum.

The alkali metal compound, the alkaline earth metal compound, or the compound of the metal of Group IIIb of the periodic table is added to a polycondensation reaction mixture in such an amount that the concentration of the metal in the reaction mixture becomes 5-600 ppm, preferably 40-600 ppm.

The above polycondensation catalysts are usually used alone, but may be used in combination.

The polycondensation reaction is preferably carried out at 120-150°C for 5-10 hours at an atmospheric pressure in a stream of nitrogen to prepare oligomers. The polycondensation reaction after the preparation of oligomers may be carried out at 160-250°C, preferably 180-240°C, more preferably 180-220°C, at 0.05-25 mmHg, preferably 0.1-25 mmHg, for 5-50 hours, preferably 10-30 hours.

The polycondensation reaction in the process of the present invention may be carried out by either continuous operation or batch operation. As the viscosity of the reaction mixture becomes high in the latter stage of the polycondensation reaction, the use of a reactor having good stirring efficiency is preferred.

After the reaction is completed, the reaction product obtained in the molten state is cooled to room temperature to give solidified polyhydroxycarboxylic acid.

The weight-average molecular weight of the polyhydroxycarboxylic acids obtained by the use of the above catalysts is usually 30,000-100,000, though it varies with the kind and amount of catalysts, reaction temperature, reaction pressure, reaction time, etc.

The polycondensation catalysts used in the process of the present invention have only weak toxicity and are added in a very small amount. As a result, the polyhydroxycarboxylic acids produced are of high purity, are almost non-toxic and removal of the catalysts therefrom is not necessary. Specifically, by the use of a sodium or calcium compound as the polycondensation catalyst, toxin-free polyhydroxycarboxylic acids of high purity can be produced. The polyhydroxycarboxylic acids produced according to the process of the present invention are excellent as biodegradable plastics because of their high molecular weight.

Certain embodiments of the invention are illustrated in the following Examples.

The weight-average molecular weight of polymers and copolymers was measured in the following manner in Examples and Comparative Examples.

A polymer or copolymer was dissolved in chloroform to prepare a 0.2 wt% solution, and the weight-average molecular weight was measured by gel permeation chromatography (GPC) using standard polystyrene of known molecular weight. As GPC columns, TOSOH G-5000, TOSOH G-3000, and TOSOH G-1000 (TOSOH CORPORATION) connected in series were used, and the measurement was carried out at a column temperature of 40°C.

### Example 1

A commercially available 90 wt% aqueous solution of L-lactic acid (500.0 g) was put into a reaction vessel equipped with a stirrer, a Dean-Stark trap, and a nitrogen-introducing tube. After substitution of nitrogen gas was carried out three times, the solution was subjected to reaction at 140°C for 5 hours in a stream of nitrogen, simultaneously with the removal of the distilled water from the reaction system, to give 365 g of lactic acid oligomer (weight-average molecular weight: 235).

The weight-average molecular weight was calculated after the lactic acid oligomer was dissolved in acetone and the resulting solution was titrated with 0.1 N KOH ethanol using Bromothymol Blue (BTB) indicator.

To 20 g of the obtained lactic acid oligomer was added sodium carbonate (Na₂CO₃) in such an amount that the concentration of the metal in the reaction mixture becomes 77 ppm, and the temperature was raised to 200°C with stirring. The pressure was reduced gradually to 20 mmHg over 30 minutes, followed by stirring at 200 ± 5°C for one hour. Then, the pressure was reduced gradually to 1 mmHg over 30 minutes, followed by stirring at 200 ± 5°C for 9 hours. The resulting mixture was cooled to room temperature to give 6.8 g of lactic acid polymer as a light brown solid (yield: 37.0%).
Weight-average molecular weight of lactic acid polymer: 68,000

### Example 2

The same procedure as in Example 1 was repeated, except that calcium carbonate (CaCO₃) was added instead of sodium carbonate (Na₂CO₃) in such an amount that the concentration of the metal in the reaction mixture becomes 140 ppm. The resulting mixture was cooled to room temperature to give 9.6 g of lactic acid polymer as a light yellow solid (yield: 52.2%).
Weight-average molecular weight of lactic acid polymer: 79,000

### Example 3

The same procedure as in Example 1 was repeated, except that lanthanum oxide (La₂O₃) was added instead of sodium carbonate (Na₂CO₃) in such an amount that the concentration of the metal in the reaction mixture becomes 420 ppm. The resulting mixture was cooled to room temperature to give 8.8 g of lactic acid polymer as a light yellow solid (yield: 47.9%).
Weight-average molecular weight of lactic acid polymer: 76,000

### Example 4

A commercially available 90 wt% aqueous solution of L-lactic acid (400.0 g) and 100.0 g of glycolic acid were put into a reaction vessel equipped with a stirrer, a Dean-Stark trap, and a nitrogen-introducing tube. After substitution of nitrogen gas was carried out three times, the mixture was subjected to reaction at 140°C for 5 hours in a stream of nitrogen, simultaneously with the removal of the distilled water from the reaction system, to give 320.2 g of lactic acid-glycolic acid oligomer (weight-average molecular weight: 212). The weight-average molecular weight was calculated in the same manner as in Example 1.

To 20 g of the obtained lactic acid-glycolic acid oligomer was added sodium carbonate (Na₂CO₃) in such an amount that the concentration of the metal in the reaction mixture becomes 77 ppm, and the temperature was raised to 200°C with stirring. The pressure was reduced gradually to 20 mmHg over 30 minutes, followed by stirring at 200 ± 5°C for one hour. Then, the pressure was reduced gradually to 1 mmHg over 30 minutes, followed by stirring at 200 ± 5°C for 9 hours. The resulting mixture was cooled to room temperature to give 6.1 g of lactic acid-glycolic acid copolymer as a light brown solid (yield: 33.0%).
Weight-average molecular weight of lactic acid-glycolic acid copolymer: 63,000

### Comparative Example 1

The same procedure as in Example 1 was repeated, except that sodium carbonate (Na₂CO₃) as a catalyst was not added. The reaction product was cooled to room temperature to give 12.3 g of lactic acid polymer as a light yellow solid.
Weight-average molecular weight of lactic acid polymer: 6,000

## Claims

1. Process for producing polyhydroxycarboxylic acids, which comprises subjecting at least one hydroxycarboxylic acid or oligomer thereof to polycondensation in the presence of a polycondensation catalyst selected from the group consisting of an alkali metal compound, an alkaline earth metal compound, and a compound of a metal of Group IIIb of the periodic table, wherein the catalyst is used in such an amount that the concentration of the metal in the polycondensation reaction mixture becomes 5-600 ppm.

2. Process according to claim 1, wherein a hydroxycarboxylic acid is used in combination with cyclic dimers thereof.

3. Process according to claim 1, wherein oligomers having a weight-average molecular weight of 200-3000 are used.

4. Process according to Claim 1 or 2, wherein the hydroxycarboxylic acid is an alphatic hydroxycarboxylic acid having 2 to 6 carbon atoms.

5. Process according to any of Claim 1 - 4, wherein the polycondensation catalyst is a compound of lithium, sodium, potassium, calcium, or magnesium.

6. Process according to Claim 5, wherein the catalyst is a carbonate, bicarbonate, hydroxycarboxylate, acetate, hydroxide, or oxide of lithium, sodium, potassium, calcium, or magnesium.

7. Process according to claim 1, wherein the catalyst is used in such an amount that the concentration of the metal in the polycondensation reaction mixture becomes 40-600 ppm.

8. Use of a polyhydroxycarboxylic acid obtained by the process of any of claims 1 to 7 for food-wrapping films, surgical sutures and drug delivery systems.

## Patentansprüche

1. Verfahren zur Herstellung von Polyhydroxycarbonsäuren, umfassend das Unterwerfen zumindest einer Hydroxycarbonsäure oder eines Oligomers davon einer Polykondensation in Gegenwart eines Polykondensationskatalysators, der aus einer Alkalimetallverbindung, Erdalkalimetallverbindung und einer Verbindung eines Metalls der Gruppe IIIb des Periodensystems gewählt wurde, wobei der Katalysator in so einer Menge verwendet wird, daß die Konzentration des Metalls in dem Polykondensationsreaktionsgemisch 5 bis 600 ppm beträgt.

2. Verfahren nach Anspruch 1, wobei eine Hydroxycarbonsäure in Kombination mit cyclischen Dimeren davon verwendet wird.

3. Verfahren nach Anspruch 1, wobei Oligomere mit einem Gewichtsmittel des Molekulargewichts von 200 bis 3.000 verwendet werden.

4. Verfahren nach Anspruch 1 oder 2, wobei die Hydroxycarbonsäure eine aliphatische Hydroxycarbonsäure mit 2 bis 6 Kohlenstoffatomen ist.

5. Verfahren nach einem der Ansprüche 1 bis 4, wobei der Polykondensationskatalysator eine Lithium-, Natrium-, Kalium-, Kalzium- oder Magnesiumverbindung ist.

6. Verfahren nach Anspruch 5, wobei der Katalysator ein Carbonat, Bicarbonat, Hydroxycarboxylat, Acetat, Hydroxid oder Oxid von Lithium, Natrium, Kalium, Kalzium oder Magnesium ist.

7. Verfahren nach Anspruch 1, wobei der Katalysator in so einer Menge verwendet wird, daß die Konzentration des Metalls in dem Polykondensationsreaktionsgemisch 40 bis 600 ppm beträgt.

8. Verwendung einer Polyhydroxycarbonsäure, die durch das Verfahren nach einem der Ansprüche 1 bis 7 erhältlich ist, für Lebensmittelverpackungsfolien, chirurgische Nähte und Arzneimittelverabreichungssysteme.

## Revendications

1. Procédé de production de polymères d'acides hydroxycarboxyliques, qui comporte le fait de soumettre au moins un acide hydroxycarboxylique ou un oligomère d'un tel acide à une polycondensation effectuée en présence d'un catalyseur de polycondensation choisi dans l'ensemble que constituent les composés des métaux alcalins, les composés des métaux alcalino-terreux et les composés des métaux du groupe IIIb du Tableau Périodique, dans lequel procédé l'on emploie le catalyseur en une quantité telle que la concentration de métal dans le mélange réactionnel de polycondensation vaille de 5 à 600 ppm.

2. Procédé conforme à la revendication 1, dans lequel on emploie un acide hydroxycarboxylique en combinaison avec son dimère cyclique.

3. Procédé conforme à la revendication 1, dans lequel on emploie des oligomères dont la masse molaire moyenne en poids vaut de 200 à 3000.

4. Procédé conforme à la revendication 1 ou 2, dans lequel l'acide hydroxycarboxylique est un acide hydroxycarboxylique aliphatique dont la molécule comporte de 2 à 6 atomes de carbone.

5. Procédé conforme à l'une des revendications 1 à 4, dans lequel le catalyseur de polycondensation est un composé du lithium, du sodium, du potassium, du calcium ou du magnésium.

6. Procédé conforme à la revendication 5, dans lequel le catalyseur de polycondensation est du carbonate, du bicarbonate, un hydroxycarboxylate, de l'acétate, de l'hydroxyde ou de l'oxyde de lithium, de sodium, de potassium, de calcium ou de magnésium.

7. Procédé conforme à la revendication 1, dans lequel on emploie le catalyseur en une quantité telle que la concentration de métal dans le mélange réactionnel de polycondensation vaille de 40 à 600 ppm.

8. Emploi d'un polymère d'acide(s) hydroxycarboxylique(s) obtenu par un procédé conforme à l'une des revendications 1 à 7 pour fabriquer des films pour emballage d'aliments, des fils pour sutures chirurgicales ou des systèmes d'administration de médicaments.
